# EUROPEAN PATENT APPLICATION

(11) **EP 2 527 021 A1**
(43) Date of publication of application: **28.11.2012**
(21) Application number: 12169056.4
(22) Date of filing: 23.05.2012
(51) Int. Cl.: B01D 29/11, B01D 29/58, B01D 29/68

(54) **Filtering system with backwash capabilities**

(30) Priority: 23.05.2011 US 201161488804 P; 29.09.2011 US 201161540580 P
(71) Applicant: Odis Irrigation Equipment Limited, 49130 Petah-Tikva (IL)
(72) Inventor: Gil, Shmuel, 44534 Kfar Saba (IL); Barzuza, Itzhak, 49383 Petah-Tikva (IL)
(74) Representative: Modiano, Micaela Nadia

(57) **Abstract**

A method and a filtering system, the filtering system may include an input chamber that has a fluid input and a first auxiliary input; an intermediate chamber that has a fluid outlet; a backwash chamber that has a backwash outlet and at least one auxiliary output; a cylinder that has a second auxiliary input; a filter located within the intermediate chamber; a backwash module that comprises: a hydraulic motor that is located within the backwash chamber; a helical movement module; a backwashing unit coupled between the hydraulic motor and the helical movement module; a piston that is coupled to the hydraulic motor and is arranged to move within the cylinder; a housing that is arranged to isolate the helical movement module from input fluid that is located in the input chamber; wherein the hydraulic motor, the helical movement module and the piston are arranged to facilitate a bi-directional helical movement of the backwash unit, when the filtering system operates in a backwashing mode; wherein the backwashing unit is arranged to clean the filter when the filtering system operates in a backwashing mode; a first pipe that is couples the first auxiliary input to a first auxiliary output of the at least one auxiliary outputs; a second pipe that couples the second auxiliary input to a second auxiliary output of the at least one auxiliary output; wherein at least one of the first and second pipe comprises an external portion that is external to the input chamber, the intermediate chamber and the backwash chamber; wherein when the filtering system operates at the backwash mode, the backwash chamber maintains a backwash pressure that is lower than (a) an input chamber pressure that is maintained in the input chamber, and (b) an intermediate chamber pressure that is maintained within the filter.

## Description

### RELATED APPLICATIONS

The application is a non-provisional of and claims priority from US provisional patent serial number 61/488,804 having a filing date of May 23 2011 and from US provisional patent serial number 61/540,580 having a filing date of September 29 2011, both being incorporated herein by reference.

### FIELD OF THE INVENTION

The present invention relates to methods for cleaning a filtering system and to filtering systems having cleaning capabilities.

### BACKGROUND OF THE INVENTION

Filtering systems are used in various fields such as but not limited to filtration of fluids, irrigation water, recycling of sewage and industrial waste water, recycling of cooling towers water, filtration and purification of drinking water etc.

Typical filtering systems include a coarse filter and a fine filter. One inevitable problem of many existing filtering systems is the accumulation of sediments on the filters and especially of the fine filter, blocking it and lowering the flow rate until totally preventing it. Thus, plain filtration systems have to be treated occasionally by cleaning the used blocked filtering element or by replacing it with a clean one, which means interrupting and stopping the filtration process from time to time.

Self-cleaning filtering systems are known in the art. Self-cleaning filtering systems usually clean a cylindrically shaped fine filter by scanning it by a backwash unit.

During a backwash operation a pressure difference is introduced between a backwash outlet and the filter that is being cleaned.

A typical backwash unit includes multiple nozzles that are fixed to the backwash body.

There is a need to provide efficient and improved methods for cleaning a filtering system and filtering systems having self-cleaning capabilities.

### SUMMARY OF THE INVENTION

According to an embodiment of the invention a filtering system is provided. The filtering system may include: (A) an input chamber that has a fluid input and a first auxiliary input; (B) an intermediate chamber that has a fluid outlet; (C) a backwash chamber that has a backwash outlet and at least one auxiliary output; (D) a cylinder that has a second auxiliary input; (E) a filter located within the intermediate chamber; (F) a backwash module that comprises: a hydraulic motor that is located within the backwash chamber; a helical movement module; a backwashing unit coupled between the hydraulic motor and the helical movement module; a piston that is coupled to the hydraulic motor and is arranged to move within the cylinder; a housing that is arranged to isolate the helical movement module from input fluid that is located in the input chamber; wherein the hydraulic motor, the helical movement module and the piston are arranged to facilitate a bi-directional helical movement of the backwash unit, when the filtering system operates in a backwashing mode; wherein the backwashing unit is arranged to clean the filter when the filtering system operates in a backwashing mode; (G) a first pipe that is couples the first auxiliary input to a first auxiliary output of the at least one auxiliary outputs; (H) a second pipe that couples the second auxiliary input to a second auxiliary output of the at least one auxiliary output; wherein at least one of the first and second pipe comprises an external portion that is external to the input chamber, the intermediate chamber and the backwash chamber; wherein when the filtering system operates at the backwash mode, the backwash chamber maintains a backwash pressure that is lower than (a) an input chamber pressure that is maintained in the input chamber, and (b) an intermediate chamber pressure that is maintained within the filter.

The first auxiliary output may differ from the second auxiliary output.

The first auxiliary output may be the second auxiliary output- thus only one auxiliary output is provides and the first and second pipes may be connected to it by a splitter.

The hydraulic motor may be arranged to introduce a rotational movement about a longitudinal axis of the backwash unit and wherein the helical movement module may be arranged to translate the rotational movement to a bi-directionat helical movement; and wherein the piston may be arranged to perform either one of a liner movement or a helical movement within the cylinder.

A majority of each of the first and second pipes may be positioned outside the input chamber, the intermediate chamber and the backwash chamber.

The first pipe and second pipe may differ from each other by length.

The first pipe and second pipe may differ from each other by diameter.

The first pipe and second pipe may differ from each other by length and diameter.

The first pipe may be at least two times longer than the second pipe.

The first pipe may be at least three times longer than the second pipe.

The filtering system may include a first auxiliary filter that is coupled between the first pipe and at least one of the first auxiliary input and the first auxiliary output.

The filtering system may include a second auxiliary filter that is coupled between the second pipe and at least one of the second auxiliary input and the second auxiliary output.

The filtering system may includes: (a) a first auxiliary filter that is coupled between the first pipe and at least one of the first auxiliary input and the first auxiliary output, and (b) a second auxiliary filter that is coupled between the second pipe and at least one of the second auxiliary input and the second auxiliary output.

The first and second auxiliary filters may differ from each other by a filter induced pressure difference that is maintained between first sides of the auxiliary filter.

The filtering system may include at least one pressure differentiating element coupled to at least one of the first and second pipes and arranged to introduce a pressure difference between the backwash pressure and at least one of a pressure subjected on the piston and a pressure subjected on the helical movement module.

The filtering system may include a first pressure reducing element coupled to the first pipe and a second pressure reducing element coupled to the second pipe; wherein first pressure reducing element is arranged to reduce a pressure subjected on the helical movement module and wherein the second pressure reducing element is arranged to reduce a pressure subjected on the piston.

The first pressure reducing element and the second pressure reducing element may differ from each other by an amount of pressure reduction.

The first pressure reducing element and the second pressure reducing element may apply a same pressure reduction.

The backwash unit may include a backwash body and multiple nozzles that extend towards the filter, wherein at least one nozzle is fixed in relation to the backwash body and at least one nozzle is arranged to move towards the filter when the filtering system operates at a backwash mode.

According to an embodiment of the invention a method may be provided for backwashing, the method may include operating a filtering system in a backwash mode; wherein the filtering system comprises: an input chamber that has a fluid input and a first auxiliary input; an intermediate chamber that has a fluid outlet; a backwash chamber that has a backwash outlet and at least one auxiliary output; a cylinder that has a second auxiliary input; a filter located within the intermediate chamber; a backwash module that comprises: a hydraulic motor that is located within the backwash chamber; a helical movement module; a backwashing unit coupled between the hydraulic motor and the helical movement module; a piston that is coupled to the hydraulic motor and is arranged to move within the cylinder; a housing that is arranged to isolate the helical movement module from input fluid that is located in the input chamber; a first pipe that is couples the first auxiliary input to a first auxiliary output of the at least one auxiliary outputs; a second pipe that couples the second auxiliary input to a second auxiliary output of the at least one auxiliary output; wherein at least one of the first and second pipe comprises an external portion that is external to the input chamber, the intermediate chamber and the backwash chamber; wherein the operating of the filtering system in the backwash mode comprises: (i) facilitating, the hydraulic motor, the helical movement module and the piston, a bi-directional helical movement of the backwash unit; (ii) cleaning, the filter by the backwashing unit; and (iii) maintaining, by the backwash chamber, a backwash pressure that is lower than (a) an input chamber pressure that is maintained in the input chamber, and (b) an intermediate chamber pressure that is maintained within the filter.

The method may include introducing, by the hydraulic motor, a rotational movement about a longitudinal axis of the backwash unit; translating, by the helical movement module, the rotational movement to a bi-directional helical movement; and performing, by the piston either one of a liner movement or a helical movement within the cylinder.

The method may include filtering fluid that either passed through the first pipe or is intended to enter the first pipe by a first auxiliary filter.

The method may include filtering fluid that either passed through the second pipe or is intended to enter the second pipe by a second auxiliary filter.

The method may include filtering fluid that either passed through the first pipe or is intended to enter the first pipe by a first auxiliary filter; and filtering fluid that either passed through the second pipe or is intended to enter the second pipe by a second auxiliary filter.

The method may include introducing by the first auxiliary filter a pressure difference that differs from a pressure difference introduced by the second auxiliary filter.

The method may include introducing a pressure difference between the backwash chamber and at least one of the piston and the helical movement module.

The method may include reducing pressure by a first pressure reducing element and by a second pressure reducing element such that the pressure subjected on the helical movement module and the subjected on the piston are lower than the backwash pressure.

The method may include reducing pressure from the helical movement module by a degree that differs from a degree of pressure reduction from the piston.

The method may include reducing pressure from the helical movement module by a degree that equals a degree of pressure reduction from the piston.

The method may include cleaning the filter by at least one nozzle of the backwashing unit that is fixed in relation to the backwash body and cleaning the filter by at least one other nozzle of the backwashing unit that moves towards the filter.

The method can be executed by and of the mentioned above filtering systems.

According to an embodiment of the invention a filtering system may be provided. The filtering system may include: (a) an input chamber that has a fluid input and a first auxiliary opening; (b) an intermediate chamber that has a fluid outlet; (c) a backwash chamber that has a backwash outlet and a second auxiliary opening; (d) a filter located within the intermediate chamber; (e) a backwash unit that may be completely surrounded by at least one space defined by the input chamber, the backwash chamber and the intermediate chamber; and (f) a coupling module arranged to facilitate a flow of fluid between the first, second and third openings. Wherein the backwash unit may include: (e. 1) a hydraulic motor that may be located within the backwash chamber; (e.2) a helical movement module; (e.3) a backwash unit coupled between the hydraulic motor and the helical movement module; (e.4) a housing that may be arranged to isolate the helical movement module from input fluid that may be located in the input chamber; wherein the housing may include a third auxiliary opening. Wherein the hydraulic motor and the helical movement module are arranged to facilitate a bi-directional helical movement of the backwash unit, when the filtering system operates in a backwashing mode. Wherein the backwash unit is arranged to clean the filter when the filtering system operates in a backwashing mode. Wherein the coupling module includes an external portion that may be external to the input chamber, the intermediate chamber and the backwash chamber. Wherein when the filtering system operates at the backwash mode, the backwash chamber maintains a backwash pressure that may be lower than an input chamber pressure that may be maintained in the input chamber.

The coupling module may include a pipe that coupled the first and second auxiliary openings to each other.

The coupling module may include at least two pipes arranged to couple the first and second auxiliary openings to each other and to couple the second and third auxiliary openings to each other.

The backwash unit may have a first end that may be positioned within the input chamber and a second end that may be positioned within the backwash chamber. The first and second ends may be positioned along a rotational axis over which the backwash unit may be arranged to rotate.

The distance between the second end of the backwash unit and the intermediate chamber may be smaller than a distance between the second end of the backwash unit and an end of the backwash chamber.

The distance between the second end of the backwash unit and the intermediate chamber may be bigger than a distance between the second end of the backwash unit and an end of the backwash chamber.

The second end of the backwash unit may be proximate to the intermediate chamber.

The second end of the backwash unit may be proximate to an end of the backwash chamber.

The hydraulic motor may be arranged to introduce a rotational movement about a longitudinal axis of the backwash unit and wherein the helical movement module may be arranged to translate the rotational movement to a bi-directional helical movement; and wherein the hydraulic motor may be coupled to a piston of the backwash unit; wherein the piston may be arranged to perform either one of a liner movement or a helical movement within the cylinder.

The majority of the coupling module may be positioned outside the input chamber, the intermediate chamber and the backwash chamber.

The coupling module may include an auxiliary filter that may be coupled between the first and second auxiliary openings.

The coupling module may include an auxiliary filter that may be coupled between the third and second auxiliary openings.

The filtering system according to claim 1, may include : (a) a first auxiliary filter that may be coupled between the first and second auxiliary openings and (b) a second auxiliary filter that may be coupled between the third and second auxiliary openings.

The first and second auxiliary filters differ from each other by a filter induced pressure difference that may be maintained between different sides of the auxiliary filter.

The coupling module may include an auxiliary pressure differentiating element that may be coupled between the first and second auxiliary openings.

The coupling module may include an auxiliary pressure differentiating element that may be coupled between the third and second auxiliary openings.

The filtering system according to claim 1, may include : (a) a first auxiliary pressure differentiating element that may be coupled between the first and second auxiliary openings and (b) a second auxiliary pressure differentiating element that is coupled between the third and second auxiliary openings.

The backwash unit may include a backwash body and multiple nozzles that extend towards the filter, wherein at least one nozzle may be fixed in relation to the backwash body and at least one nozzle may be arranged to move towards the filter when the filtering system operates at a backwash mode.

A method for backwashing, the method may include : operating a filtering system in a backwash mode; wherein the filtering system may include: an input chamber that has a fluid input and a first auxiliary opening; an intermediate chamber that has a fluid outlet; a backwash chamber that has a backwash outlet and a second auxiliary opening; a filter located within the intermediate chamber; a backwash unit that may be completely surrounded by at least one space defined by the input chamber, the backwash chamber and the intermediate chamber; wherein the backwash unit may include : a hydraulic motor that may be located within the backwash chamber; a helical movement module; a backwash unit coupled between the hydraulic motor and the helical movement module; a housing that may be arranged to isolate the helical movement module from input fluid that may be located in the input chamber; wherein the housing may include a third auxiliary opening; wherein the operating of the filtering system in the backwash mode may include : facilitating, by the hydraulic motor and the helical movement module, a bi-directional helical movement of the backwash unit; cleaning the filter by the backwash unit while the backwash unit performs the bi-directional helical movement; and maintaining, by the backwash chamber, a backwash pressure that may be lower than an input chamber pressure that may be maintained in the input chamber.

The coupling module may include a pipe that coupled the first and second auxiliary openings to each other.

The coupling module may include at least two pipes arranged to couple the first and second auxiliary openings to each other and to couple the second and third auxiliary openings to each other.

The backwash unit has a first end that may be positioned within the input chamber and a second end that may be positioned within the backwash chamber; wherein the first and second ends are positioned along a rotational axis over which the backwash unit may be arranged to rotate.

The distance between the second end of the backwash unit and the intermediate chamber may be smaller than a distance between the second end of the backwash unit and an end of the backwash chamber.

The distance between the second end of the backwash unit and the intermediate chamber is bigger than a distance between the second end of the backwash unit and an end of the backwash chamber.

The second end of the backwash unit is proximate to the intermediate chamber.

The second end of the backwash unit may be proximate to an end of the backwash chamber.

The method may include introducing, by the hydraulic motor, a rotational movement about a longitudinal axis of the backwash unit and wherein the helical movement module may be arranged to translate the rotational movement to a bi-directional helical movement; and wherein the hydraulic motor may be coupled to a piston of the backwash unit; wherein the piston may be arranged to perform either one of a liner movement or a helical movement within the cylinder.

The majority of the coupling module may be positioned outside the input chamber, the intermediate chamber and the backwash chamber.

The method may include filtering fluid that passes through the coupling module by an auxiliary filter that may be coupled between the first and second auxiliary openings.

The method may include filtering fluid that passes through the coupling module by an auxiliary filter that may be coupled between the third and second auxiliary openings.

The method may include filtering fluid that passes through the coupling module by a first auxiliary filter that may be coupled between the first and second auxiliary openings and by a second auxiliary filter that may be coupled between the third and second auxiliary openings.

The first and second auxiliary filters differ from each other by a filter induced pressure difference that may be maintained between different sides of the auxiliary filter.

The method may include introducing a pressure difference between the first and second openings by an auxiliary pressure differentiating element that may be coupled between the first and second auxiliary openings.

The method may include introducing a pressure difference between the third and second openings by an auxiliary pressure differentiating element that may be coupled between the third and second auxiliary openings.

The method may include introducing a pressure difference between the first and second openings by a first auxiliary pressure differentiating element that may be coupled between the first and second auxiliary openings; and introducing a pressure difference between the third and second openings by a second auxiliary pressure differentiating element that may be coupled between the third and second auxiliary openings.

The method may include cleaning the filter by at least one nozzle of the backwash unit that may be fixed in relation to the backwash body and cleaning the filter by at least one other nozzle of the backwash unit that moves towards the filter.

The method can be executed by and of the mentioned above filtering systems.

There may be provided a filtering system that may include a coupling module that may be arranged to generate a mixture of backwash chamber fluid and filtered fluid and provide the mixture to the housing that surrounds the helical movement module. The mixture can be provided to the housing at a pressure level that differs from an outlet pressure maintained at the fluid outlet of the filtering system.

The backwash chamber fluid can be relatively dirty and by mixing it with the filtered fluid the concentration of dirt is lowered.

The coupling module can be entirely positioned within a space defined by the input chamber, the intermediate chamber and the backwash chamber

Alternatively, at least a portion of the coupling module is external to the input chamber, the intermediate chamber and the backwash chamber.

The coupling module may arrange to provide the mixture at a mixture pressure that substantially equals the backwash pressure. The mixture pressure may be closer to the backwash pressure that to the outlet pressure.

The coupling module may include a pressure reduction element arranged to reduce a pressure of the filtered fluid at the mixing element.

The coupling module may be arranged to mix a certain amount of the filtered fluid with a larger amount of backwash chamber fluid.

The coupling module may include a uni-directional value arranged to prevent backwash chamber fluid from flowing towards the fluid outlet.

The coupling module may include a filtered fluid pipe that may be arranged to receive the filtered fluid from the filtered fluid opening and to provided the filtered fluid to at least one other element of the coupling module. The at least one other element may be a uni-directional valve, a mixing element or a pipe.

The fluid pipe may have a cross section that is narrower that a cross section of a pipe of the coupling module that is coupled to the input chamber.

The filtering system may include an input chamber that has a fluid input for receiving input fluid at an input pressure; an intermediate chamber that has a fluid outlet for outputting filtered fluid at an outlet pressure; a backwash chamber that has a backwash outlet for outputting backwash fluid at a backwash pressure; a filter located within the intermediate chamber , the filter may be arranged to filter the input fluid to provide the filtered fluid; a backwash module that unit includes a motor such as hydraulic motor, a helical movement module, and a backwash unit coupled to the motor and to the helical movement module, a housing that may be arranged to isolate the helical movement module from the input fluid, a filtered fluid opening , and a coupling module.

The hydraulic motor and the helical movement module may be arranged to facilitate a bi-directional helical movement of the backwash unit, when the filtering system operates in a backwashing mode. The backwash unit may be arranged to clean the filter when the filtering system operates in a backwashing mode.

The coupling module may be arranged to (a) receive filtered fluid, (b) receive backwash chamber fluid; and (c) provide to the housing a mixture of the filtered fluid and of the backwash chamber fluid, at a mixture pressure that differs from the outlet pressure.

The coupling module may include a filtered fluid pipe , a uni-directional valve , a mixing element, a first pipe and at least one additional pipe such as intermediate pipe.

The filtered fluid pipe can be connected between the uni-directional valve and the filtered fluid opening. The intermediate pipe is connected between an outlet of the uni-directional valve and the mixing element that is illustrated as a hole formed in the first pipe.

The first pipe receives filtered fluid from intermediate pipe , receives backwash chamber fluid from the second auxiliary opening and provides a mixture of these fluids to the first auxiliary opening (from there the mixture passes towards the housing). The mixture is provided at a mixture pressure level that may differ from the outlet pressure.

The mixture may also be provided (via the first pipe) to the backwash chamber.

It is noted that the mixture element can include multiple openings and that the first and second auxiliary openings can be coupled to each other by more than a single pipe.

The hydraulic motor can be replaced by another type of motor such as an electrical motor.

A method may be provided and may include operating a filtering system in a backwash mode. The filtering system may include an input chamber that has a fluid input for receiving input fluid at an input pressure; an intermediate chamber that has a fluid outlet for outputting filtered fluid at an outlet pressure; a backwash chamber that has a backwash outlet for outputting backwash fluid at a backwash pressure; a filter located within the intermediate chamber; a backwash module that unit comprises: a motor; a helical movement module; a backwash unit coupled to the motor and to the helical movement module; a housing that may be arranged to isolate the helical movement module from the input fluid. The operating in the backwash mode may include facilitating, by the motor and the helical movement module, a bi-directional helical movement of the backwash unit; cleaning the filter by the backwash module; includes receiving, by the coupling module, filtered fluid and backwash chamber fluid; generating a mixture of the filtered fluid and of the backwash chamber fluid and providing to the housing the mixture of the filtered fluid and of the backwash chamber fluid, at a mixture pressure that differs from the outlet pressure.

The method may include providing the mixture by a coupling module that is entirely positioned within a space defined by the input chamber, the intermediate chamber and the backwash chamber

The method may include providing the mixture by a coupling module that has at least a portion that is external to the input chamber, the intermediate chamber and the backwash chamber.

The mixture pressure may substantially equal the backwash pressure. Pressure differences between the mixture pressure and the backwash pressure can be range, for example, between 1 and 40 percents, between 20 and 30 percent, between 5 and 15 percent and the like.

The mixture pressure may be closer to the backwash pressure that to the outlet pressure.

The method may include reducing a pressure level of the filtered fluid before generating the mixture the filtered fluid and the backwash chamber filter.

The generating the mixture can include mixing a certain amount of the filtered fluid with a larger amount of backwash chamber fluid.

The method may include preventing, by a uni-directional value of the coupling module, backwash chamber fluid from flowing towards the fluid outlet.

The method may include receiving the filtered fluid from the filtered fluid outlet by a filtered fluid pipe, and providing by the filtered fluid pipe, the filtered fluid to at least one other element of the coupling module. The at least one other element may be a uni-directional valve, a pipe or a mixing element. The fluid pipe may have has a cross section that is narrower that a cross section of a pipe of the coupling module that is coupled to the input chamber.

The method may include filtering, by the filter, the input fluid to provide the filtered fluid, when the filtering system operates at a filtering mode.

### BRIEF DESCRIPTION OF THE FIGURES

The present invention will be understood and appreciated more fully from the following detailed description taken in conjunction with the drawings in which:

FIG. 1 is a cross sectional view of a filtering system, according to an embodiment of the invention;

FIG. 2 is a cross sectional view of a filtering system, according to an embodiment of the invention;

FIG. 3 is a cross sectional view of a filtering system, according to an embodiment of the invention;

FIG. 4 is a cross sectional view of a filtering system, according to an embodiment of the invention;

FIG. 5 is a cross sectional view of a filtering system, according to an embodiment of the invention;

FIG. 6 is a cross sectional view of a filtering system, according to an embodiment of the invention;

FIG. 7 is a cross sectional view of a portion of a filtering system, according to another embodiment of the invention;

FIG. 8 is a flow chart illustrating a method for cleaning a filtering system, according to an embodiment of the invention;

FIG. 9 illustrates a stage of the method of FIG. 8 according to an embodiment of the invention;

FIG. 10 is a cross sectional view of a filtering system, according to an embodiment of the invention;

FIG. 11 is a cross sectional view of a filtering system, according to an embodiment of the invention;

FIG. 12 is a cross sectional view of a filtering system, according to an embodiment of the invention;

FIG. 13 is a cross sectional view of a filtering system, according to an embodiment of the invention;

FIG. 14 is a cross sectional view of a filtering system, according to an embodiment of the invention;

FIG. 15 is a cross sectional view of a filtering system, according to an embodiment of the invention;

FIG. 16 is a cross sectional view of a filtering system, according to an embodiment of the invention;

FIG. 17 is a flow chart illustrating a method for cleaning a filtering, system, according to an embodiment of the invention;

FIG. 18 is a cross sectional view of a filtering system, according to an embodiment of the invention;

FIG. 19 is a cross sectional view of a filtering system, according to an embodiment of the invention;

FIG. 20 is a cross sectional view of a filtering system, according to an embodiment of the invention; and

FIG. 21 is a flow chart illustrating a method for cleaning a filtering system, according to an embodiment of the invention.

It will be appreciated that for simplicity and clarity of illustration, elements shown in the Figures have not necessarily been drawn to scale. For example, the dimensions of some of the elements may be exaggerated relative to other elements for clarity. Further, where considered appropriate, reference numerals may be repeated among the Figures to indicate corresponding or analogous elements.

### DETAILED DESCRIPTION OF THE FIGURES

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

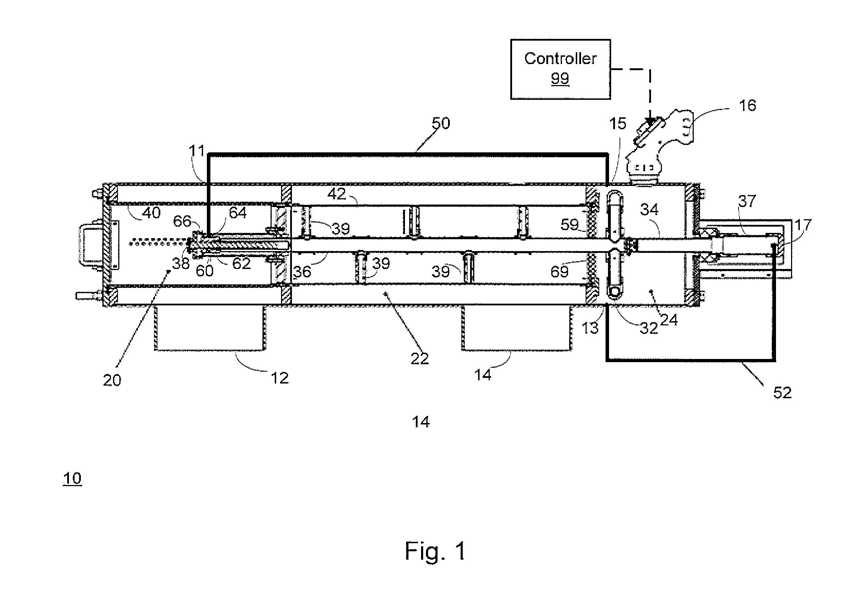

FIG. 1 is a cross sectional view of filtering system 10, according to an embodiment of the invention. The cross section is made along an imaginary longitudinal axis of the filtering system 10 that may be horizontal and lies at the center of the filtering system 10.

Filtering system 10 can include one or more filters. It usually includes a coarse filter as well as a fine filter. For simplicity of explanation it is assumed that filtering system 10 includes a cylindrical coarse filter 40 and a substantially cylindrical filter file filter 42 that is also refereed to as filter 42.

It is noted that the coarse filter 20 can be subjected to a backwash operation, but this is not necessarily so. For convenience of explanation the following description refers to backwash operation of filter 42.

At any given point in time the filtering system 10 can operate in one out of multiple operational modes including (but not limited to) a filtering mode and a backwashing mode. When operating in the filtering mode the cylindrical coarse filter 40 and the fine filter 42 operate to filter fluid that enters through a fluid inlet 12 and exits, after being filtered, through a fluid outlet 14. The filtering process can include a coarse filtering (by the coarse filter 40) and fine filtering (by the fine filter 42).

When operating in the backwash mode a backwash valve 16 is opened and the filter 42 is being backwashed. The switching between one operational mode to the other can be triggered by events (for example - an indication that the fine filter 42 is clogged), per a predefined timing schedule and the like and can be controlled by controller 99. For simplicity of explanation the controller 99 is illustrated only in figure 1 although that it may be included in any other filtering systems of other figures.

Referring to figure 1, the filtering system 100 can include:
2. An input chamber 20 that has a fluid input 12 and a first auxiliary input 11.
3. An intermediate chamber 22 that has a fluid outlet 14.
4. A backwash chamber 24 that has a backwash valve 16 that also provides a backwash outlet and at least one auxiliary output (such as first auxiliary output 15 and second auxiliary output 13).
5. A cylinder 37 that has a second auxiliary input 17.
6. A filter (such as fine filter 42) that is located within the intermediate chamber 22.
7. A backwash module.
8. A housing 66 that is arranged to isolate a helical movement module from input fluid that is located in the input chamber 20.
9. A first pipe 50 that couples the first auxiliary input 11 to a first auxiliary output 15.
10. A second pipe 52 that couples the second auxiliary input 17 to a second auxiliary output 13.
11. Controller 99 that is arranged to control the operation of the filtering system 100 and may be arranged to switch between one operational mode (filtering mode, backwash mode) to another.

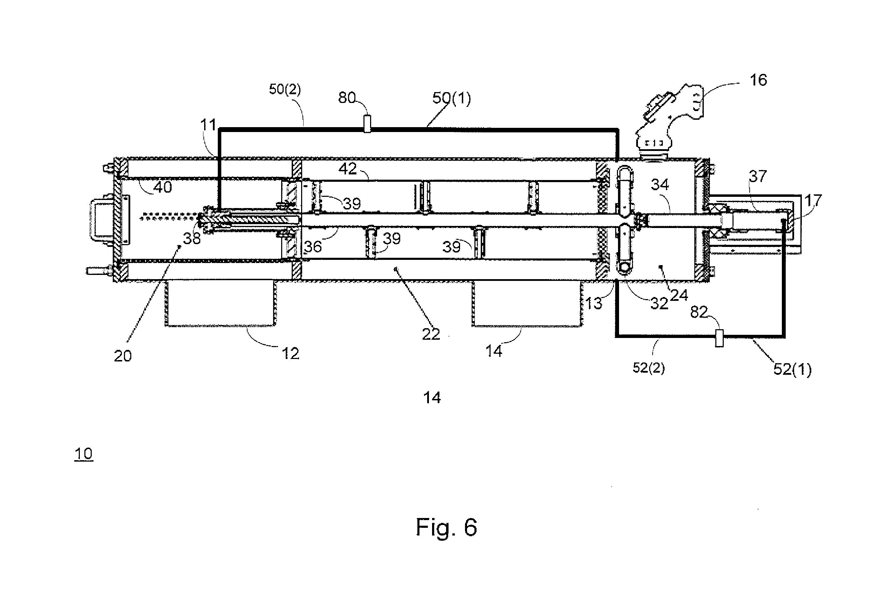

The different chambers can be sealed or at least partially isolated from each other in order to enable the development of different pressures in the different chambers. Some sealing elements are denoted in figure 1 and 6 as 69.

The backwash unit is illustrated in figure 1 as including:
2. A hydraulic motor 32 that is located within the backwash chamber 24.
3. A helical movement module 60.
4. A backwashing unit (illustrated in figure 1 as including a hollow backwash body 36 and multiple nozzles 39 that radially extend from the hollow backwash body) that is coupled between the hydraulic motor 32 and the helical movement module 60.
5. A piston 34 that is coupled to the hydraulic motor 32 and is arranged to move within the cylinder 37.

It is noted that these components of the backwash unit can be connected to each other either directly or vie other interfacing elements.

The hydraulic motor 32, the helical movement module 60 and the piston 34 can be arranged to facilitate a bi-directional helical movement of the backwash unit, when the filtering system 10 operates in a backwashing mode. Thus, the backwash unit is arranged to perform a helical movement along a first direction (for example- clockwise and towards the piston) and then is arranged to perform a helical movement along a second direction (for example - counterclockwise and towards the coarse filter).

Especially, the hydraulic motor 32 may be arranged to introduce a rotational movement about a longitudinal axis of the backwash unit. The helical movement module 60 may be is arranged to translate the rotational movement to a bi-directional helical movement. The piston 34 may be arranged to perform either one of a liner movement or a helical movement within the cylinder. The latter can be preformed when the piston 32 is strictly connected to the hydraulic motor 32 or to the backwash unit. The latter can be performed when the piston 32 is connected to either one of these elements (hydraulic motor 32 or backwash unit) via a helical to linear movement transformer.

The backwashing unit may be arranged to clean the filter 42 when the filtering system 10 operates in a backwashing mode. It scans the filter 42 while moving along a helical path and its nozzles suck debris and dirt from the inner side of the filter 42, pass it though the (hollow) backwashing body 36, through the hydraulic motor 32, the backwash chamber 24 and through the backwash outlet 16.

At least one of the first and second pipes 50 and 52 may include an external portion that is external to the input chamber 20, the intermediate chamber 22 and the backwash chamber 24. It is noted that the term pipe means any element arranged to facilitate a flow of fluid from one end of the element to the other end of the element.

When the filtering system 10 operates at the backwash mode, the backwash chamber 24 maintains a backwash pressure that is lower than (a) an input chamber pressure that is maintained in the input chamber 20, and (b) an intermediate chamber pressure that is maintained within the filter 42.

Either one of these pressures refers to the pressure of the fluid within a compartment - such as a pressure of an input fluid that enters the input chamber 20, a pressure of a coarsely filtered fluid located within the intermediate chamber 22 before being filtered by the filter 42, a pressure of a fine filtered fluid located within the intermediate chamber 22 after being filtered by the filter 42, and a pressure of fluid within the backwash chamber 24.

Figures 1-5 illustrates multiple (for example two) auxiliary outputs - so that the first auxiliary output 15 differs from the second auxiliary output 13 and the backwash chamber 24 has a pair of auxiliary outputs. It is noted that the backwash chamber 24 can include a single auxiliary output and both pipes 50 and 52 may be connected to the single auxiliary output either directly or indirectly (for example via a splitter).

Figures 1-5 illustrates a majority of each of the first and second pipes (50 and 52) as being positioned outside the input chamber, the intermediate chamber and the backwash chamber.

The first pipe 50 and second pipe 52 may differ from each other by length, by diameter or by both length and diameter.

The filtering system 10 of figure 1 subjects the piston 34 and the helical movement module 60 to pressures that are lower than the pressure of fluid in the input chamber 20 or any pressure of fluid (coarsely filtered or finely filtered) within the intermediate chamber 22. The exposure to lower pressure levels may prolong the lifespan of the piston 34, helical movement module 60 and the pipes 50 and 52 and, additionally or alternatively, may ease the operation of the backwash module 60.

The fluid within the backwash chamber 34 can be provided via the first and second pipes 50 and 52 to the cylinder 37 and to the helical movement module 60. The fluid can be relatively dirty and thus may be filtered before reaching the cylinder 37 and to the helical movement module 60. This filtering is optional as this fluid does not reach the intermediate chamber 22 and does not hamper the filtering process.

Thus - one or more auxiliary filters can be positioned to filter said fluid. An auxiliary filter can be positioned outside the chambers (20, 22 and 24) of the filtering system 10 and can be configured to be easily removed, cleaned and additionally or alternatively replaced. For example, each auxiliary filter can be positioned within a housing that can be easily opened when the auxiliary filter should be replaced or cleaned.

The first auxiliary filter can be located any where between the first auxiliary input and the first auxiliary input. It can be, for example, connected between the first pipe and the first auxiliary input, between the first pipe and the first auxiliary output and can also be positioned between two segments of the first pipe.

The second auxiliary filter can be located any where between the second auxiliary input and the second auxiliary input. It can be, for example, connected between the second pipe and the second auxiliary input, between the second pipe and the second auxiliary output and can also be positioned between two segments of the second pipe.

If the filtering system includes both a first auxiliary filter and a second auxiliary filter than those filters can be equal to each other or may differ from each other by size, by one or more filtering parameters and the like. A filtering parameter can include a filtering level (size of filtered elements), pressure differential introduced between both sides of the auxiliary filter and the like.

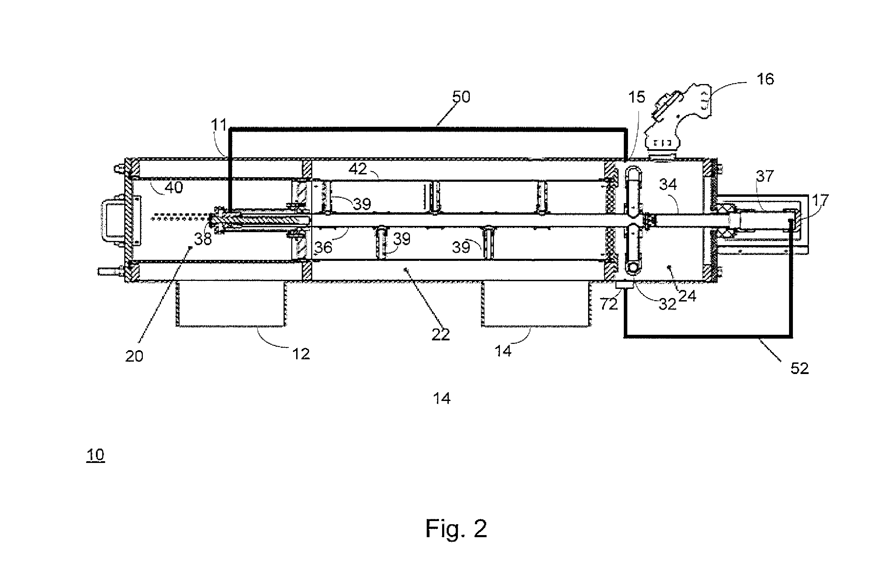

Figure 2 illustrates a filtering system 100 that includes a second auxiliary filter 72 that is positioned between the second auxiliary output 13 and the second pipe 52.

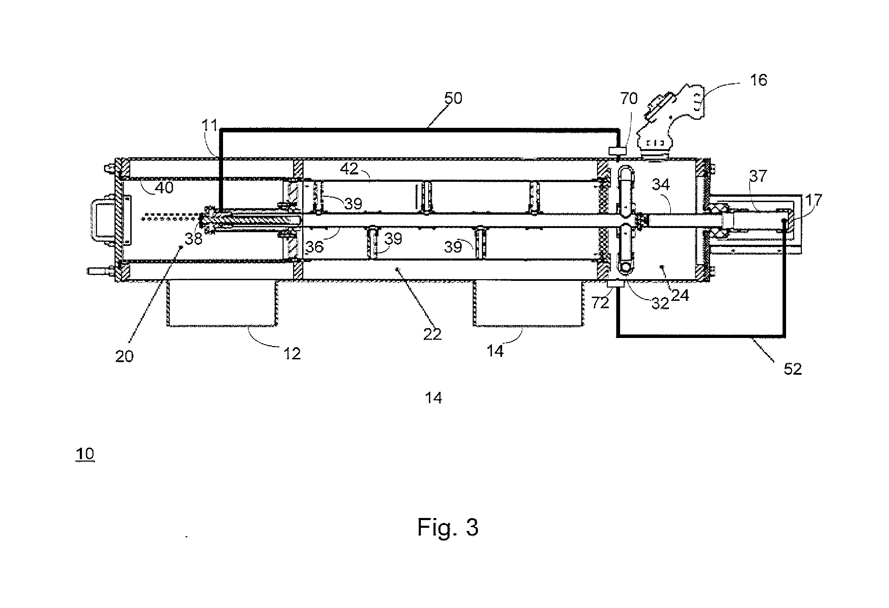

Figure 3 illustrates a filtering system 100 that includes (a) a second auxiliary filter 72 that is positioned between the second auxiliary output 13 and the second pipe 52, and (b) a first auxiliary filter 70 that is positioned between the first auxiliary output 15 and the second pipe 50.

It is noted that the filtering system can include the first auxiliary filter and not include the second auxiliary filter.

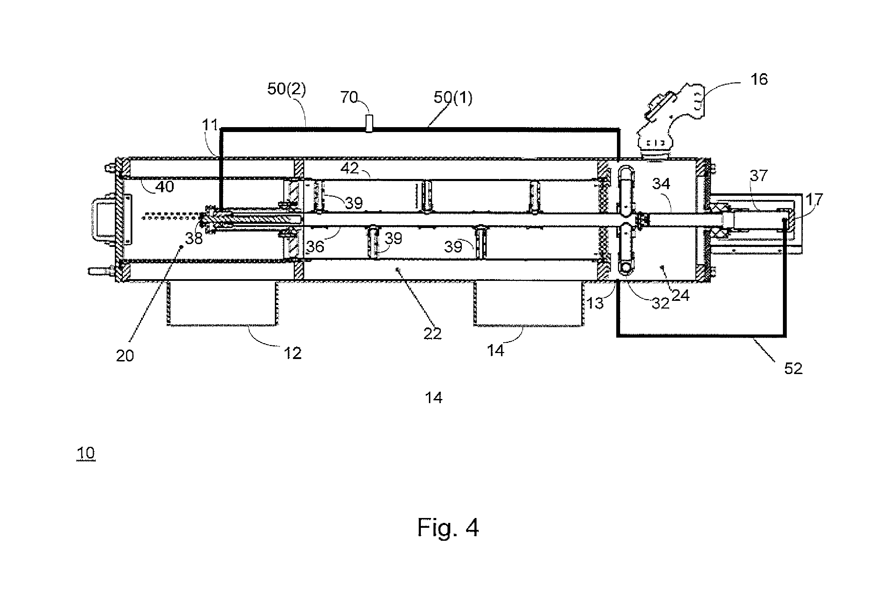

Figure 4 illustrates a filtering system 100 that includes a second auxiliary filter 70 that is positioned between two segments 50(1) and 50(0) of the second pipe 50.

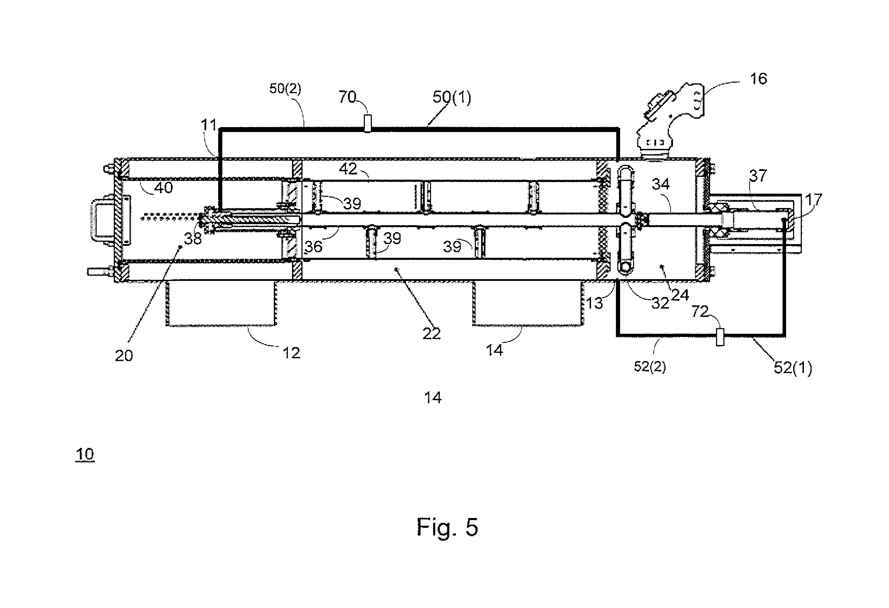

Figure 5 illustrates a filtering system 100 that includes a first auxiliary filter 72 that is positioned between two segments 52(1) and 52(2) of the first pipe 52 and a second auxiliary filter 70 that is positioned between two segments 50(1) and 50(0) of the second pipe 50.

It is noted that each of the auxiliary filters can act as a pressure differentiating element that can introduce a pressure difference between the backwash chamber pressure and a pressure of either the cylinder (in the case of the first auxiliary filter 52) or the helical movement module 60 (in the case of the second auxiliary filter 50). It is noted that other well known pressure differentiating elements (such as valves, and the like) can be positioned in order to expose at least one of the piston and the helical movement module 60 to a pressure that is lower than the backwash pressure and thus further prolonging the lifespan of the components or easing the helical movement of the backwash module.

Accordingly, according to an embodiment of the invention the filtering system may include at least one pressure differentiating element coupled to at least one of the first and second pipes 50 and 52 and arranged to introduce a pressure difference between the backwash pressure and at least one of a pressure subjected on the piston and a pressure subjected on the helical movement module.

Figure 6 illustrates a filtering system 100 that includes a first pressure differentiating element 82 that is positioned between two segments 52(1) and 52(2) of the first pipe 52 and a second pressure differentiating element 80 that is positioned between two segments 50(1) and 50(0) of the second pipe 50.

It is noted that the filtering system 100 can include one or more than three pressure differentiating elements and that they can be positioned at locations that correspond to the location of the auxiliary filters illustrated in figures 2-5. It is noted that a filtering system can include one or more pressure differentiating element and one or more auxiliary filter.

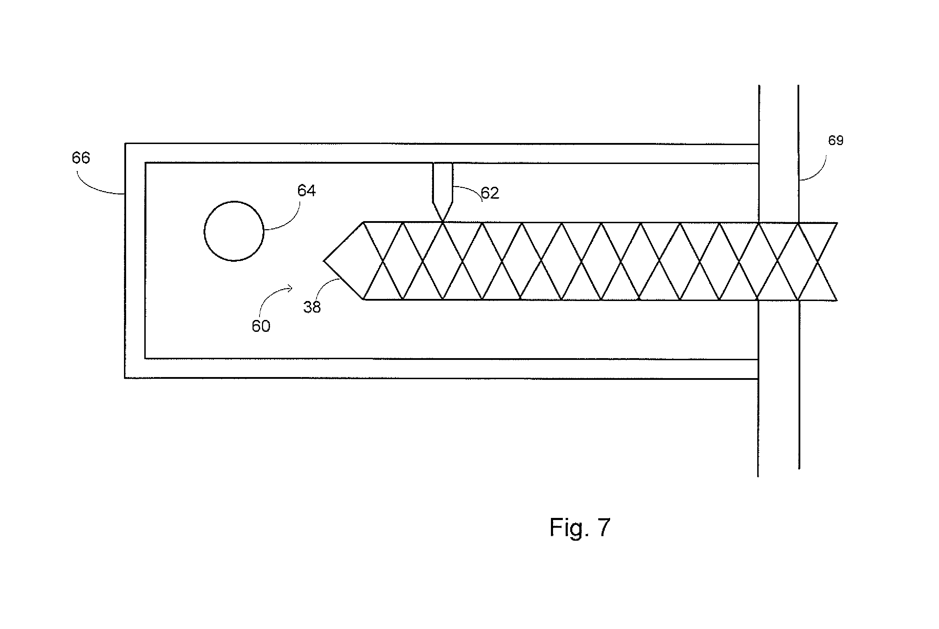

Figure 7 illustrates a portion of housing 66 and the helical movement module 60 according to an embodiment of the invention.

The portion illustrates a bi-directional thread 38 that may contact a tracking guide 62 that may be fixed to a housing 66 that isolates the helical movement module 60 from the fluid that flows in the input channel 20 and therefore allows to subject the helical movement module 60 to a pressure that is lower and even munch lower (one or more bars) from the higher pressure that is maintained in the input chamber 20. Figure 6 also illustrates a third auxiliary input 64. The first and third auxiliary inputs allow the first pipe to enter the input chamber 20 and then enter the housing 66 that is located within the input chamber 20. It is noted that different segments of the first pipe and even different pipes can be connected between the first auxiliary output, the first auxiliary input and the third auxiliary input.

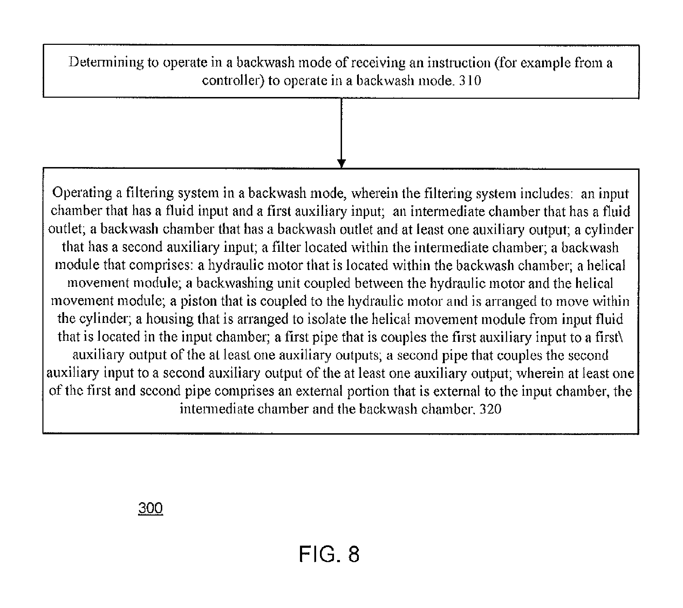

FIG. 8 is a flow chart illustrating method 300 for cleaning a filtering system, according to an embodiment of the invention.

Method 300 may start by stage 310 of determining to operate in a backwash mode or receiving an instruction (for example from a controller) to operate in a backwash mode.

Stage 310 is followed by stage 320 of operating a filtering system in a backwash mode, wherein the filtering system include; an input chamber that has a fluid input and a first auxiliary input; an intermediate chamber that has a fluid outlet; a backwash chamber that has a backwash outlet and at least one auxiliary output; a cylinder that has a second auxiliary input; a filter located within the intermediate chamber; a backwash module that comprises: a hydraulic motor that is located within the backwash chamber; a helical movement module; a backwashing unit coupled between the hydraulic motor and the helical movement module; a piston that is coupled to the hydraulic motor and is arranged to move within the cylinder; a housing that is arranged to isolate the helical movement module from input fluid that is located in the input chamber; a first pipe that is couples the first auxiliary input to a first\ auxiliary output of the at least one auxiliary outputs; a second pipe that couples the second auxiliary input to a second auxiliary output of the at least one auxiliary output; wherein at least one of the first and second pipe comprises an external portion that is external to the input chamber, the intermediate chamber and the backwash chamber.

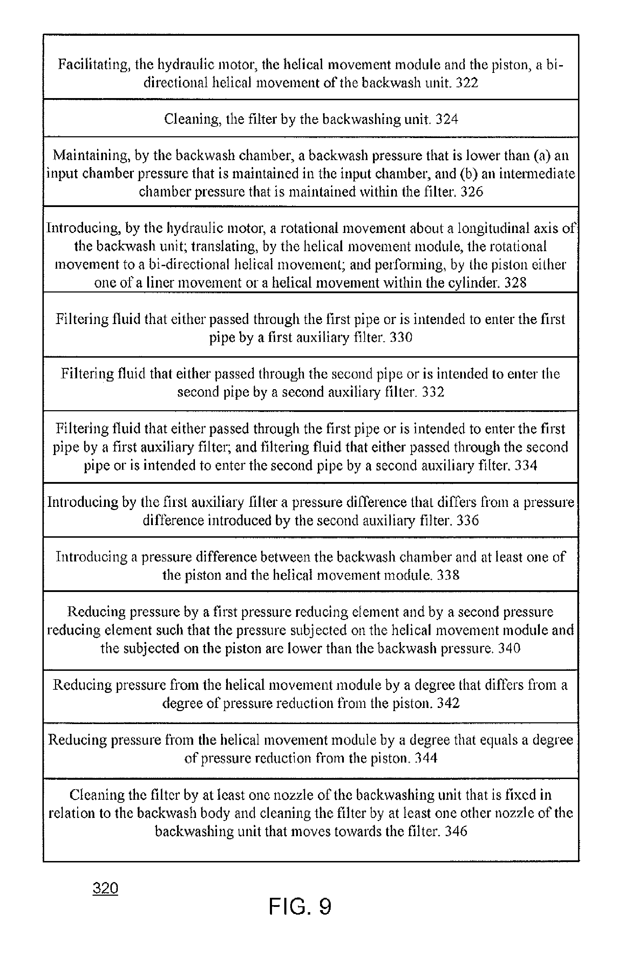

Stage 320 may include at least one of stages 322-346 that are illustrated in figure 9.

Stage 322 may include facilitating, the hydraulic motor, the helical movement module and the piston, a bi-directional helical movement of the backwash unit.

Stage 324 may include cleaning, the filter by the backwashing unit.

Stage 326 may include maintaining, by the backwash chamber, a backwash pressure that is lower than (a) an input chamber pressure that is maintained in the input chamber, and (b) an intermediate chamber pressure that is maintained within the filter.

Stage 328 may include introducing, by the hydraulic motor, a rotational movement about a longitudinal axis of the backwash unit; translating, by the helical movement module, the rotational movement to a bi-directional helical movement; and performing, by the piston either one of a liner movement or a helical movement within the cylinder.

Stage 330 may include filtering fluid that either passed through the first pipe or is intended to enter the first pipe by a first auxiliary filter.

Stage 332 may include filtering fluid that either passed through the second pipe or is intended to enter the second pipe by a second auxiliary filter.

Stage 334 may include filtering fluid that either passed through the first pipe or is intended to enter the first pipe by a first auxiliary filter; and filtering fluid that either passed through the second pipe or is intended to enter the second pipe by a second auxiliary filter.

Stage 336 may include introducing by the first auxiliary filter a pressure difference that differs from a pressure difference introduced by the second auxiliary filter.

Stage 338 may include introducing a pressure difference between the backwash chamber and at least one of the piston and the helical movement module.

Stage 340 may include reducing pressure by a first pressure reducing element and by a second pressure reducing element such that the pressure subjected on the helical movement module and the subjected on the piston are lower than the backwash pressure.

Stage 342 may include reducing pressure from the helical movement module by a degree that differs from a degree of pressure reduction from the piston.

Stage 344 may include reducing pressure from the helical movement module by a degree that equals a degree of pressure reduction from the piston.

Stage 346 may include cleaning the filter by at least one nozzle of the backwashing unit that is fixed in relation to the backwash body and cleaning the filter by at least one other nozzle of the backwashing unit that moves towards the filter.

Stage 320 may be followed by stage 360 of determining to operate in a filtering mode or receiving an instruction (for example from a controller) to operate in a filtering mode.

Stage 360 is followed by stage 370 of operating in a filtering mode. Stage 370 can be followed by stage 310.

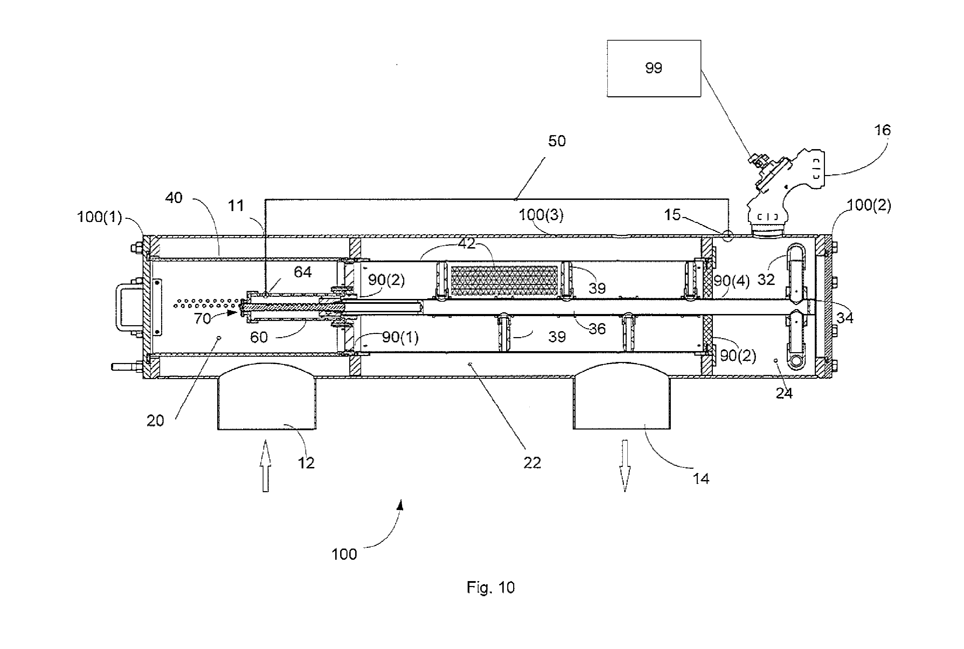

Figure 10 is a cross sectional view of filtering system 100, according to an embodiment of the invention. The cross section is made along an imaginary longitudinal axis of the filtering system 100 that may be horizontal and lies at the center of the filtering system 100.

Filtering system 100 can include one or more filters. It usually includes a coarse filter as well as a fine filter. For simplicity of explanation it is assumed that filtering system 100 includes a cylindrical coarse filter 40 and a substantially cylindrical filter fine filter 42 that is also refereed to as filter 42.

It is noted that the coarse filter 20 can be subjected to a backwash operation, but this is not necessarily so. For convenience of explanation the following description refers to backwash operation of filter 42.

At any given point in time the filtering system 100 can operate in one out of multiple operational modes including (but not limited to) a filtering mode and a backwashing mode. When operating in the filtering mode the cylindrical coarse filter 40 and the fine filter 42 operate to filter fluid that enters through a fluid inlet 12 and exits, after being filtered, through a fluid outlet 14. The filtering process can include a coarse filtering (by the coarse filter 40) and fine filtering (by the fine filter 42).

When operating in the backwash mode a backwash valve 16 is opened and the filter 42 is being backwashed. The switching between one operational mode to the other can be triggered by events (for example - an indication that the fine filter 42 is clogged), per a predefined timing schedule and the like and can be controlled by controller 99. For simplicity of explanation the controller 99 is illustrated only in figure 10 although that it may be included in any other filtering systems of other figures.

Referring to figure 10, the filtering system 100 can include:
2. An input chamber 20 that has a fluid input 12 and a first auxiliary input 11.
3. An intermediate chamber 22 that has a fluid outlet 14.
4. A backwash chamber 24 that has a backwash valve 16 that also provides a backwash outlet and an auxiliary output 15.
5. A filter (such as fine filter 42) that is located within the intermediate chamber 22.
6. A backwash unit 80. The backwash unit 80 is completely surrounded by at least one space defined by the input chamber 20, the backwash chamber 24 and the intermediate chamber 22. Especially, the filtering system 100 has a cylindrical shape and has two sidewalls 100(1) and 100(2) that are substantially flat and parallel to each other. These sidewalls are connected to a curved wall 100(3) that has a circular cross section. The backwash unit has two ends 81 and 82. The second end 82 does not extend beyond sidewall 100(2).
7. A coupling module such as pipe 50 that couples the first, second and third auxiliary openings 11, 15 and 64 to each other and thereby facilitate flow of fluid between the backwash chamber 24 and the interior of housing 60.
8. Controller 99 that is arranged to control the operation of the filtering system 100 and may be arranged to switch between one operational mode (filtering mode, backwash mode) to another.

The backwash unit 80 may include: (i) a hydraulic motor 32 that is located within the backwash chamber 24; (ii) a helical movement module 70; (iii) a backwash unit 30 coupled between the hydraulic motor 32 and the helical movement module 70; (iii) a housing 60 that is arranged to isolate the helical movement module 70 from input fluid that is located in the input chamber 20. The housing 60 may include a third auxiliary opening 64.

The different chambers can be sealed or at least partially isolated from each other in order to enable the development of different pressures in the different chambers. Some sealing elements are denoted in figure 1 as 90(1) and 90(2). Sealing element 90(1) is positioned between the input chamber 20 and the intermediate chamber 22. Sealing element 90(2) is positioned between the intermediate chamber 22 and the backwash chamber 24. Each of these sealing elements 90(1) and 90(2) provides support to the backwash unit 80.

These sealing elements include apertures 90(3) and 90(4) through which the backwashing body 36 can rotate about its axis.

The backwash unit 80 is illustrated in figure 1 as including a hollow backwash body 36 and multiple nozzles 39 that radially extend from the hollow backwash body 36. The backwash body may be connected at one end to the hydraulic motor 32 and at another end to helical movement module 70. The hydraulic motor 32 and, additionally or alternatively, the backwash body 36 may be connected to a piston 34 that is positioned within the backwash chamber 24.

It is noted that these components of the backwash unit can be connected to each other either directly or vie other interfacing elements.

The hydraulic motor 32, the helical movement nodule 60 and the piston 34 can be arranged to facilitate a bi-directional helical movement of the backwash unit, when the filtering system 10 operates in a backwashing mode. Thus, the backwash unit is arranged to perform a helical movement along a first direction (for example- clockwise and towards the piston) and then is arranged to perform a helical movement along a second direction (for example - counterclockwise and towards the coarse filter).

Especially, the hydraulic motor 32 may be arranged to introduce a rotational movement about a longitudinal axis of the backwash unit. The helical movement module 70 may be is arranged to translate the rotational movement to a bi-directional helical movenent. The piston 34 may be arranged to perform either one of a liner movement or a helical movement within the backwash chamber. The latter can be preformed when the piston 34 is strictly connected to the hydraulic motor 32 or to the backwash unit. The latter can be performed when the piston 32 is connected to either one of these elements (hydraulic motor 32 or backwash unit) via a helical to linear movement transformer.

The piston 34 can be provided in addition to the backwashing body or be an integral part of the backwashing body 36.

The backwash unit 80 has a first end 81 located within the input chamber 20 and a second end 82 located in the backwash chamber 24. The second end 82 is shown as being proximate and even contacting sidewall 100(2). This illustrates the rightmost position of the backwash unit 80. During the backwashing of the filter 40 the backwash unit 80 rotates and moves to the left. It is noted that other spatial relationships can be provided. For example, the second end 34 can be distant from the sidewall 100(2) even when the backwash body is in its rightmost position.

The backwash unit 80 may be arranged to clean the filter 42 when the filtering system 100 operates in a backwashing mode. It scans the filter 42 while moving along a helical path and its nozzles suck debris and dirt from the inner side of the filter 42, pass it though the (hollow) backwashing body 36, through the hydraulic motor 32, the backwash chamber 24 and through the backwash outlet 16.

The pipe may include an external portion that is external to the input chamber 20, the intermediate chamber 22 and the backwash chamber 24. It is noted that the term pipe means any element arranged to facilitate a flow of fluid from one end of the element to the other end of the element.

When the filtering system 10 operates at the backwash mode, the backwash chamber 24 maintains a backwash pressure that is lower than (a) an input chamber pressure that is maintained in the input chamber 20. The backwash pressure can be lower than an intermediate chamber pressure that is maintained within the filter 42.

Either one of these pressures refers to the pressure of the fluid within a compartment - such as a pressure of an input fluid that enters the input chamber 20, a pressure of a coarsely filtered fluid located within the intermediate chamber 22 before being filtered by the filter 42, a pressure of a fine filtered fluid located within the intermediate chamber 22 after being filtered by the filter 42, and a pressure of fluid within the backwash chamber 24.

Figures 10-15 illustrates multiple auxiliary openings. An opening can serve as an inlet or as an outlet- depending upon the direction of flow of the fluid. Each opening may be equipped with a uni-directional value, a bi-directional valve, a filter, a pressure differentiating element or a combination thereof. It is noted that such elements (values, filters, pressure differentiating elements) can be positioned between the first and second auxiliary openings, between the second and third auxiliary openings or between both the first and second auxiliary openings and the second and third auxiliary openings.

Although the various figures illustrate the same pipe 50 that is coupled between the first and second auxiliary openings and the second and third auxiliary openings it is noted that a coupling elements can couple the first and second auxiliary openings while another coupling element can couple between the second and third auxiliary openings. These coupling elements may be differ from each other by diameter, shape of cross section, material, and the like.

The filtering system 100 of figure 10 subjects the helical movement module 70 to pressures that are lower than the pressure of fluid in the input chamber 20 or any pressure of fluid (coarsely filtered or finely filtered) within the intermediate chamber 22. The exposure to lower pressure levels may prolong the lifespan of the helical movement module 70 and the pipe 50 and, additionally or alternatively, may ease the operation of the backwash unit 60.

The piston 34 and the hydraulic motor 32 may be subjected to the same (or substantially the same) pressure (backwash pressure).

The fluid within the backwash chamber 34 can be provided via the pipe 50 to the helical movement module 70 that is positioned within housing 60.

The fluid can be relatively dirty and thus may be filtered before reaching the cylinder 37 and to the helical movement module 60. This filtering is optional as this fluid does not reach the intermediate chamber 22 and does not hamper the filtering process.

Thus - one or more auxiliary filters can be positioned to filter said fluid. An auxiliary filter can be positioned outside the chambers (20, 22 and 24) of the filtering system 100 and can be configured to be easily removed, cleaned and additionally or alternatively replaced. For example, each auxiliary filter can be positioned within a housing that can be easily opened when the auxiliary filter should be replaced or cleaned. Additionally or alternatively, one or more auxiliary filters can be located within one of these chambers.

A first auxiliary filter can be located any where between the first and second auxiliary openings. It can be, for example, connected between the pipe and the first auxiliary opening, between the pipe and the second auxiliary opening and can also be positioned between two segments of the pipe (between the second and first auxiliary openings).

A second auxiliary filter can be located any where between the third and second auxiliary openings. It can be, for example, connected between the pipe and the second auxiliary opening, between the pipe and the third auxiliary opening and can also be positioned between two segments of the pipe (between the second and third auxiliary openings).

If the filtering system includes both a first auxiliary filter and a second auxiliary filter than those filters can be equal to each other or may differ from each other by size, by one or more filtering parameters and the like. A filtering parameter can include a filtering level (size of filtered elements), pressure differential introduced between both sides of the auxiliary filter and the like.

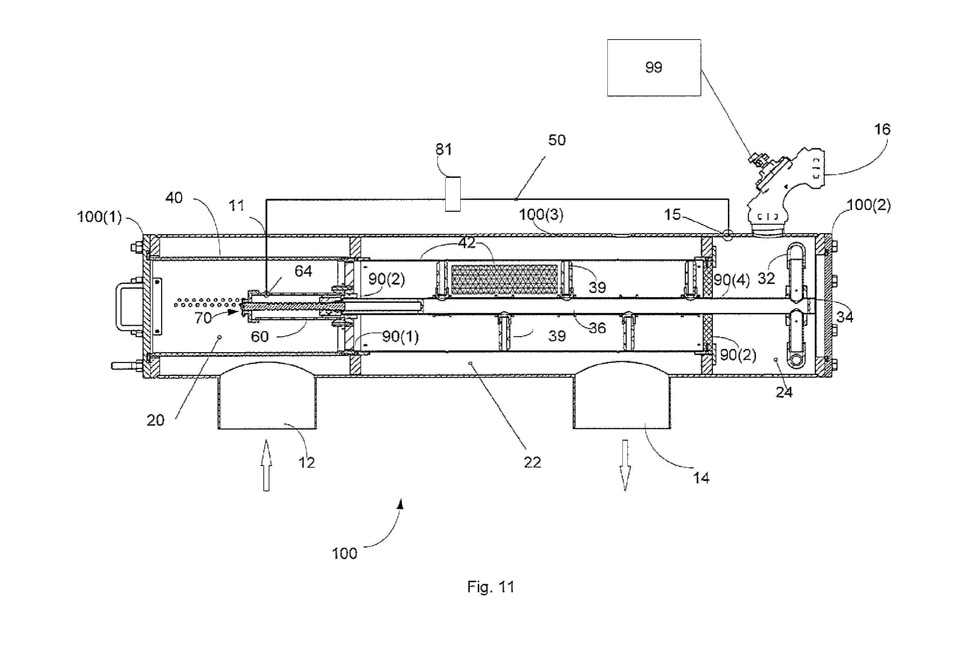

Figure 11 illustrates a filtering system 100 that includes an auxiliary filter 81 that is positioned between the first and second auxiliary openings 15 and 11. It may be connected to two portions of pipe 50.

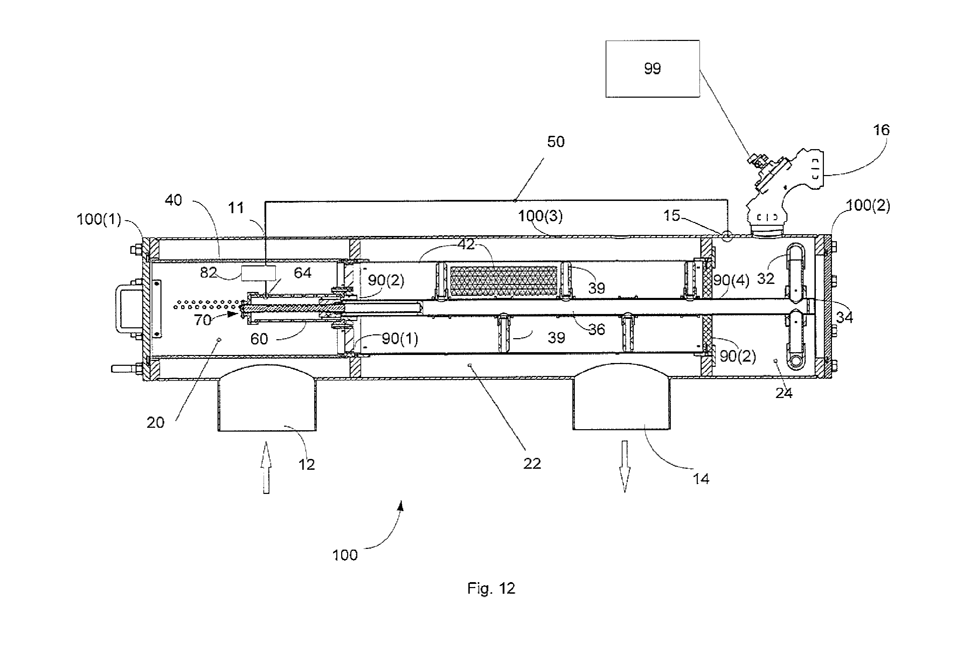

Figure 12 illustrates a filtering system 100 that includes a second auxiliary filter 82 that is positioned between the second and third auxiliary openings 11 and 64.

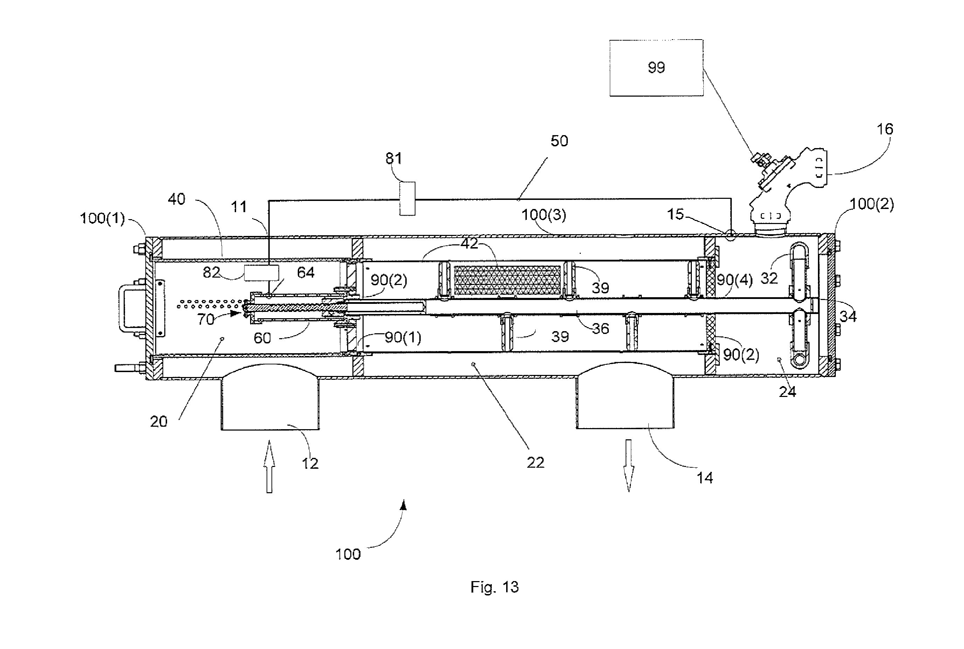

Figure 13 illustrates a filtering system 100 that includes an auxiliary filter 81 that is positioned between the first and second auxiliary openings 15 and 11. It may be connected to two portions of pipe 50. This filtering system also includes a second auxiliary filter 82 that is positioned between the second and third auxiliary openings 11 and 64.

Each of these auxiliary filters can be replaces by a pressure differentiating element that introduces a pressure difference between opposite different ends of the pressure differentiating element.

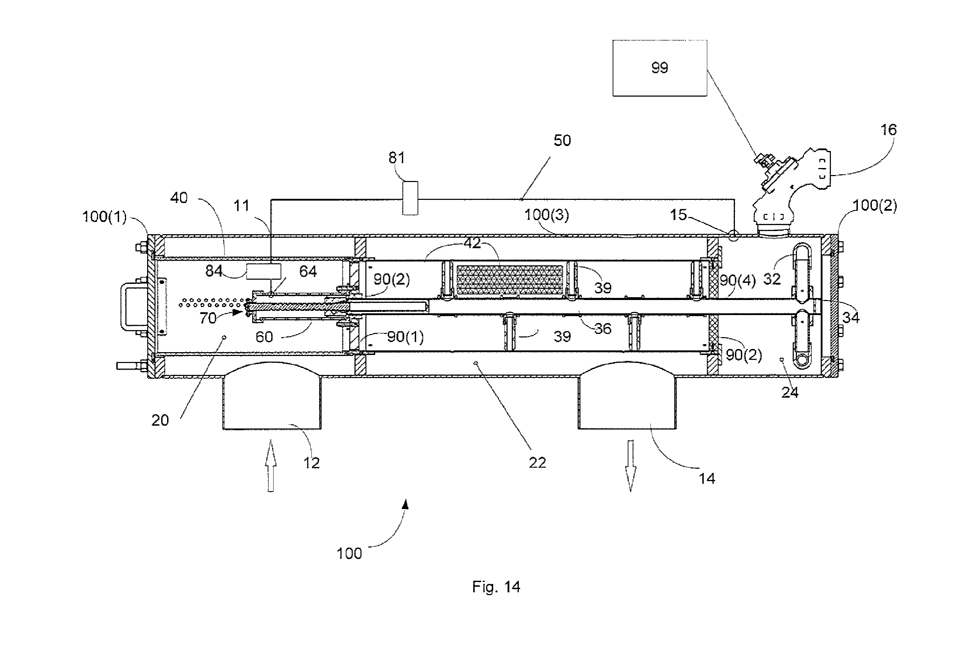

Figure 14 illustrates a filtering system 100 that includes an auxiliary filter 81 that is positioned between the first and second auxiliary openings 15 and 11. It may be connected to two portions of pipe 50. This filtering system also includes a pressure differentiating element 84 that is positioned between the second and third auxiliary openings 11 and 64.

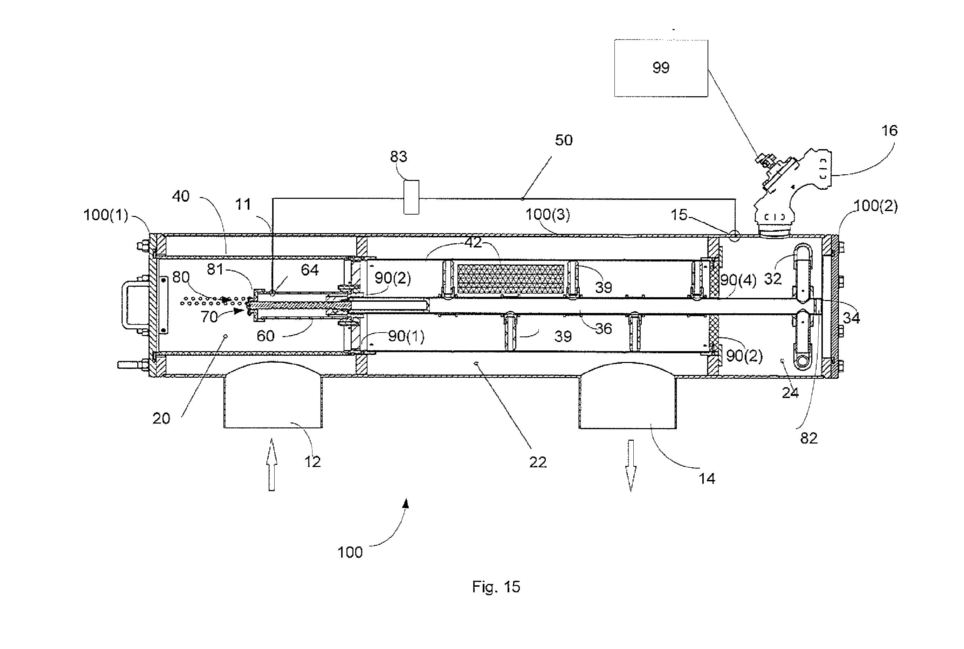

Figure 15 illustrates a filtering system 100 that includes a pressure differentiating element 83 that is positioned between the first and second auxiliary openings 15 and 11.

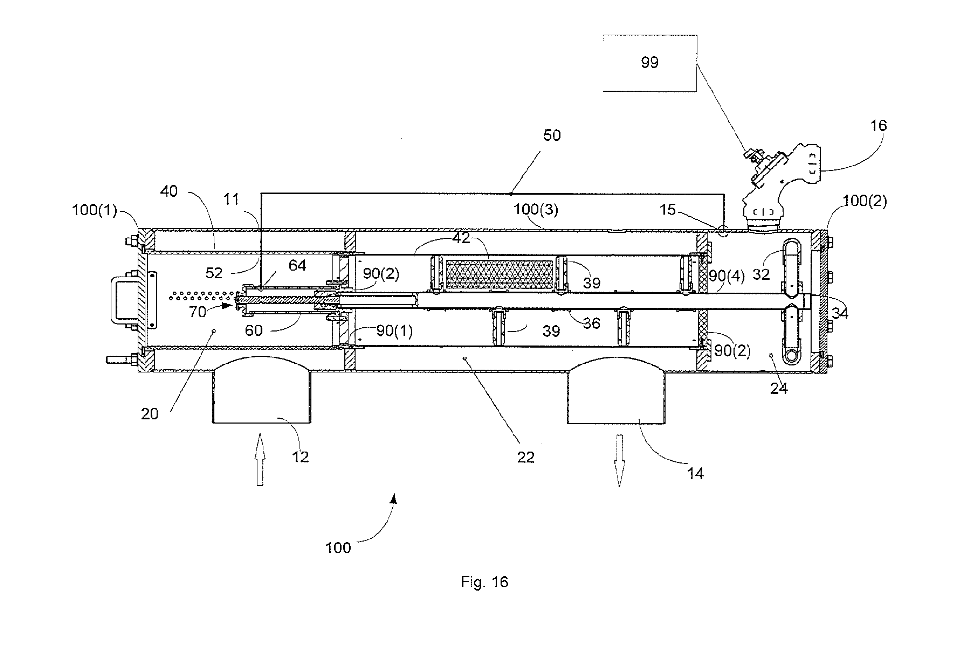

Figure 16 illustrates a filtering system 100 that includes a first pipe 50 that couples between the first and second auxiliary openings 11 and 15 and a second pipe 52 connected between the second and third auxiliary openings 15 and 64.

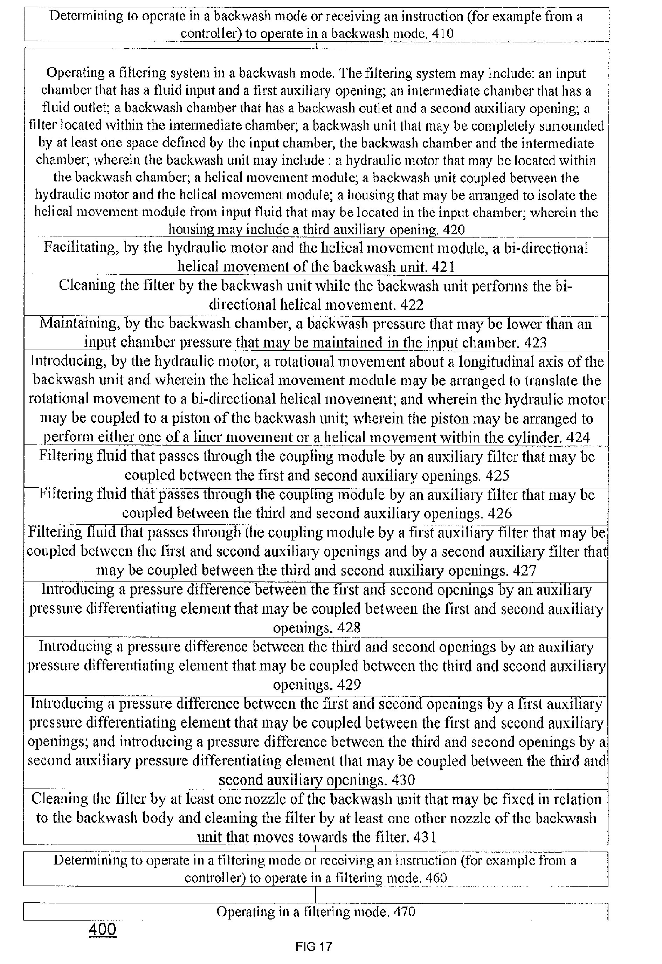

Figure 17 is a flow chart illustrating method 300 for cleaning a filtering system, according to an embodiment of the invention.

Method 400 may start by stage 410 of determining to operate in a backwash mode or receiving an instruction (for example from a controller) to operate in a backwash mode.

Stage 410 is followed by stage 420 of operating a filtering system in a backwash mode. The filtering system may include: an input chamber that has a fluid input and a first auxiliary opening; an intermediate chamber that has a fluid outlet; a backwash chamber that has a backwash outlet and a second auxiliary opening; a filter located within the intermediate chamber; a backwash unit that may be completely surrounded by at least one space defined by the input chamber, the backwash chamber and the intermediate chamber; wherein the backwash unit may include: a hydraulic motor that may be located within the backwash chamber; a helical movement module; a backwash unit coupled between the hydraulic motor and the helical movement module; a housing that may be arranged to isolate the helical movement module from input fluid that may be located in the input chamber; wherein the housing may include a third auxiliary opening.

Stage 420 of operating of the filtering system in the backwash mode may include: (A) stage 421 of facilitating, by the hydraulic motor and the helical movement module, a bi-directional helical movement of the backwash unit. (B) Stage 422 of cleaning the filter by the backwash unit while the backwash unit performs the bi-directional helical movement. (C) Stage 423 of maintaining, by the backwash chamber, a backwash pressure that may be lower than an input chamber pressure that may be maintained in the input chamber.

The coupling module may include a pipe that coupled the first and second auxiliary openings to each other.

The coupling module may include at least two pipes arranged to couple the first and second auxiliary openings to each other and to couple the second and third auxiliary openings to each other.

The backwash unit has a first end that may be positioned within the input chamber and a second end that may be positioned within the backwash chamber; wherein the first and second ends are positioned along a rotational axis over which the backwash unit may be arranged to rotate.

The distance between the second end of the backwash unit and the intermediate chamber may be smaller than a distance between the second end of the backwash unit and an end of the backwash chamber.

The distance between the second end of the backwash unit and the intermediate chamber is bigger than a distance between the second end of the backwash unit and an end of the backwash chamber.

The second end of the backwash unit is proximate to the intermediate chamber.

The second end of the backwash unit may be proximate to an end of the backwash chamber.

Stage 420 may include stage 424 of introducing, by the hydraulic motor, a rotational movement about a longitudinal axis of the backwash unit and wherein the helical movement module may be arranged to translate the rotational movement to a bi-directional helical movement; and wherein the hydraulic motor may be coupled to a piston of the backwash unit; wherein the piston may be arranged to perform either one of a liner movement or a helical movement within the cylinder.

The majority of the coupling module may be positioned outside the input chamber, the intermediate chamber and the backwash chamber.

Stage 420 may include stage 425 of filtering fluid that passes through the coupling module by an auxiliary filter that may be coupled between the first and second auxiliary openings.

Stage 420 may include stage 426 of filtering fluid that passes through the coupling module by an auxiliary filter that may be coupled between the third and second auxiliary openings.

Stage 420 may include stage 427 of filtering fluid that passes through the coupling module by a first auxiliary filter that may be coupled between the first and second auxiliary openings and by a second auxiliary filter that may be coupled between the third and second auxiliary openings.

The first and second auxiliary filters differ from each other by a filter induced pressure difference that may be maintained between different sides of the auxiliary filter.

Stage 420 may include stage 428 of introducing a pressure difference between the first and second openings by an auxiliary pressure differentiating element that may be coupled between the first and second auxiliary openings.

Stage 420 may include stage 429 of introducing a pressure difference between the third and second openings by an auxiliary pressure differentiating element that may be coupled between the third and second auxiliary openings.

Stage 420 may include stage 430 of introducing a pressure difference between the first and second openings by a first auxiliary pressure differentiating element that may be coupled between the first and second auxiliary openings; and introducing a pressure difference between the third and second openings by a second auxiliary pressure differentiating element that may be coupled between the third and second auxiliary openings.

Stage 420 may include stage 431 of cleaning the filter by at least one nozzle of the backwash unit that may be fixed in relation to the backwash body and cleaning the filter by at least one other nozzle of the backwash unit that moves towards the filter.

The method 400 can be executed by and of the mentioned above filtering systems.

Stage 420 may be followed by stage 460 of determining to operate in a filtering mode or receiving an instruction (for example from a controller) to operate in a filtering mode.

Stage 460 is followed by stage 470 of operating in a filtering mode. Stage 470 can be followed by stage 410.

Although each of figures 1-6 and 10-16 illustrated a hydraulic motor, the hydraulic motor of each of these figures can be replaced by a electrical motor or any other type of motor. Any of the mentioned systems can include a motor that differs from a hydraulic motor.

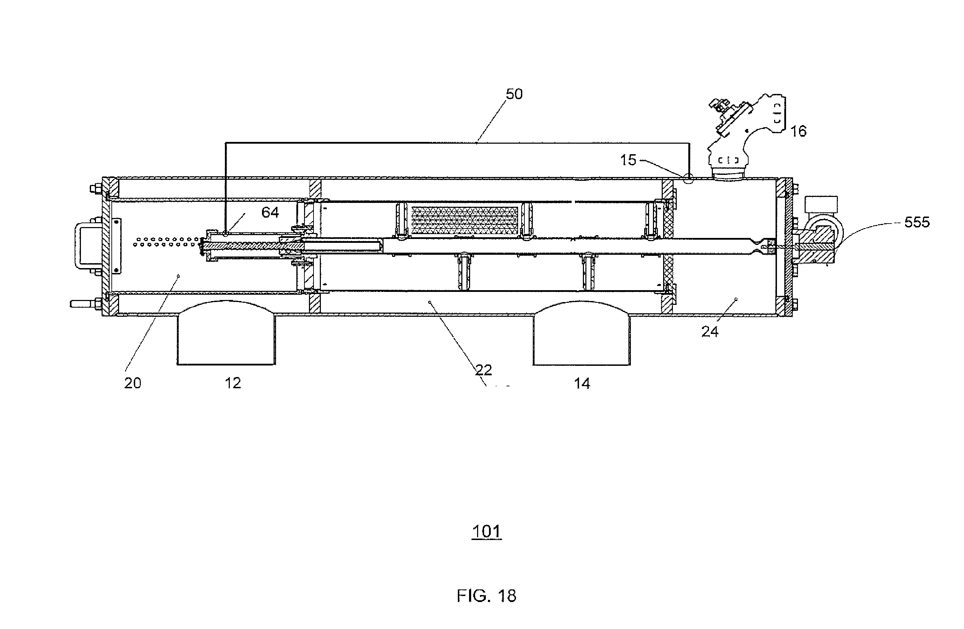

Figure 18 illustrates a filtering system 101 that differs from the filtering system 100 of figure 10 by including an electrical motor 555 instead an hydraulic motor (denoted 32 in figure 10).

Each of the systems of figures 1-6 and 10-16 and 18 can include a coupling module that may be arranged to generate a mixture of backwash chamber fluid and filtered fluid and provide the mixture to the housing that surrounds the helical movement module. The mixture can be provided to the housing at a pressure level that differs from an outlet pressure maintained at the fluid outlet of the filtering system.

The backwash chamber fluid can be relatively dirty and by mixing it with the filtered fluid the concentration of dirt is lowered.

The coupling module can be entirely positioned within a space defined by the input chamber, the intermediate chamber and the backwash chamber

Alternatively, at least a portion of the coupling module is external to the input chamber, the intermediate chamber and the backwash chamber.

The coupling module may arrange to provide the mixture at a mixture pressure that substantially equals the backwash pressure. The mixture pressure may be closer to the backwash pressure that to the outlet pressure.

The coupling module may include a pressure reduction element arranged to reduce a pressure of the filtered fluid at the mixing element.

The coupling module may be arranged to mix a certain amount of the filtered fluid with a larger amount of backwash chamber fluid.

The coupling module may include a uni-directional value arranged to prevent backwash chamber fluid from flowing towards the fluid outlet.

The coupling module may include a filtered fluid pipe that is arranged to receive the filtered fluid from the filtered fluid opening and to provided the filtered fluid to at least one other element of the coupling module. The at least one other element may be a uni-directional valve, a mixing element or a pipe.

The fluid pipe may have a cross section that is narrower that a cross section of a pipe of the coupling module that is coupled to the input chamber.

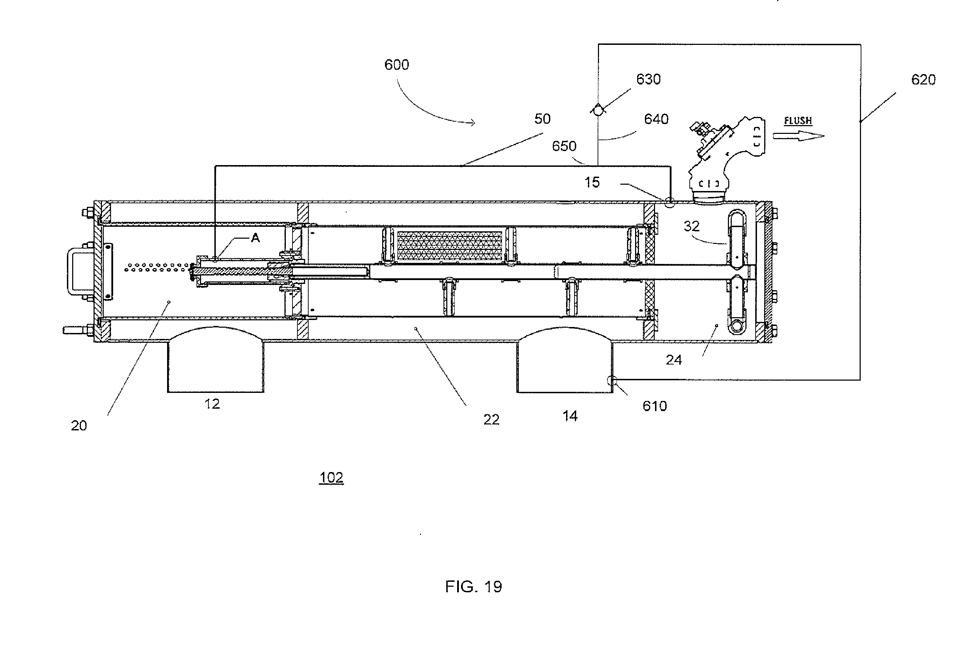

Figures 19-20 illustrate filtering systems that include coupling modules 600 that are arranged to generate such a mixture while preventing the mixture from entering the fluid outlet.

Figure 19 illustrates a filtering system 102 according to an embodiment of the invention, the system 102 includes:
(A) an input chamber 20 that has a fluid input 12 for receiving input fluid at an input pressure.
(B) An intermediate chamber 22 that has a fluid outlet 14 for outputting filtered fluid at an outlet pressure.
(C) A backwash chamber 24 that has a backwash outlet 16 for outputting backwash fluid at a backwash pressure.
(D) A filter 100(3) located within the intermediate chamber 22. The filter is arranged to filter the input fluid to provide the filtered fluid.
(E) A backwash module that unit includes a motor such as hydraulic motor 32, a helical movement module, and a backwash unit coupled to the motor and to the helical movement module.
(F) A housing 60 that is arranged to isolate the helical movement module from the input fluid.
(G)A filtered fluid opening 650.
(H) Coupling module 600.

The hydraulic motor 32 and the helical movement module are arranged to facilitate a bi-directional helical movement of the backwash unit, when the filtering system operates in a backwashing mode. The backwash unit is arranged to clean the filter when the filtering system operates in a backwashing mode.

The coupling module 600 is arranged to (a) receive filtered fluid, (b) receive backwash chamber fluid; and (c) provide to the housing a mixture of the filtered fluid and of the backwash chamber fluid, at a mixture pressure that differs from the outlet pressure.

Figure 19 illustrates the coupling module 600 as including a filtered fluid pipe 620, a uni-directional valve 630, a mixing element 640, a first pipe 650 and at least one additional pipe such as intermediate pipe 540.

The filtered fluid pipe 520 can be connected between the uni-directional valve 630 and the filtered fluid opening 650. The intermediate pipe 540 is connected between an outlet of the uni-directional valve 630 and the mixing element 640 that is illustrated as a hole formed in the first pipe 650.

The first pipe 650 receives filtered fluid from intermediate pipe 640, receives backwash chamber fluid from the second auxiliary opening 15 and provides a mixture of these fluids to the first auxiliary opening 11 (from there the mixture passes towards the housing 60). The mixture is provided at a mixture pressure level that may differ from the outlet pressure.

The mixture may also be provided (via the first pipe 650) to the backwash chamber.

It is noted that the mixture element 640 can include multiple openings and that the first and second auxiliary openings can be coupled to each other by more than a single pipe.

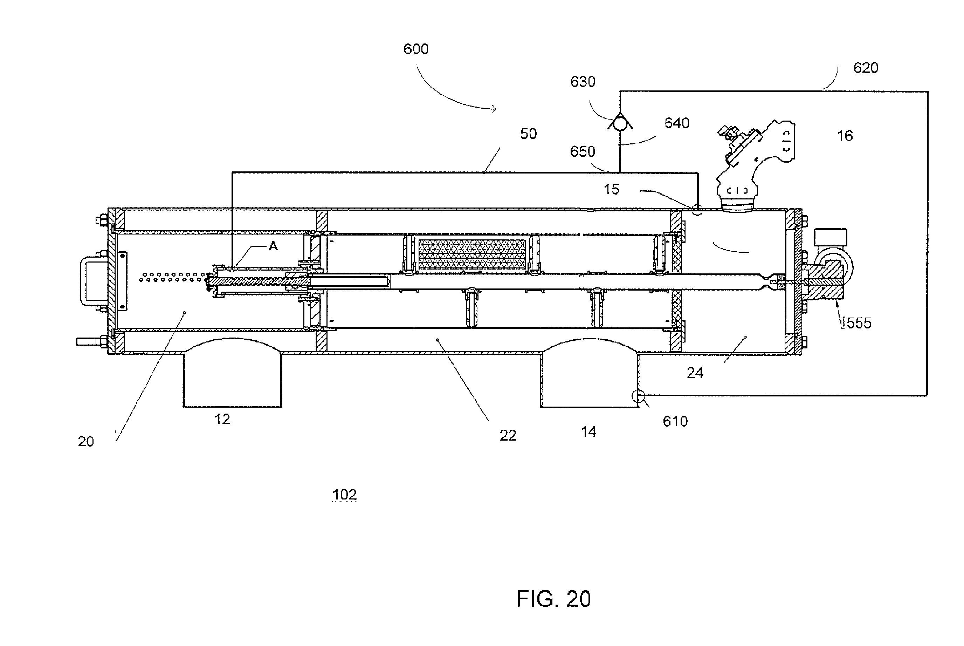

Figure 20 illustrates a filtering system 102 that differs from the filtering system of figure 19 by having a motor 555 that differs from a hydraulic motor.

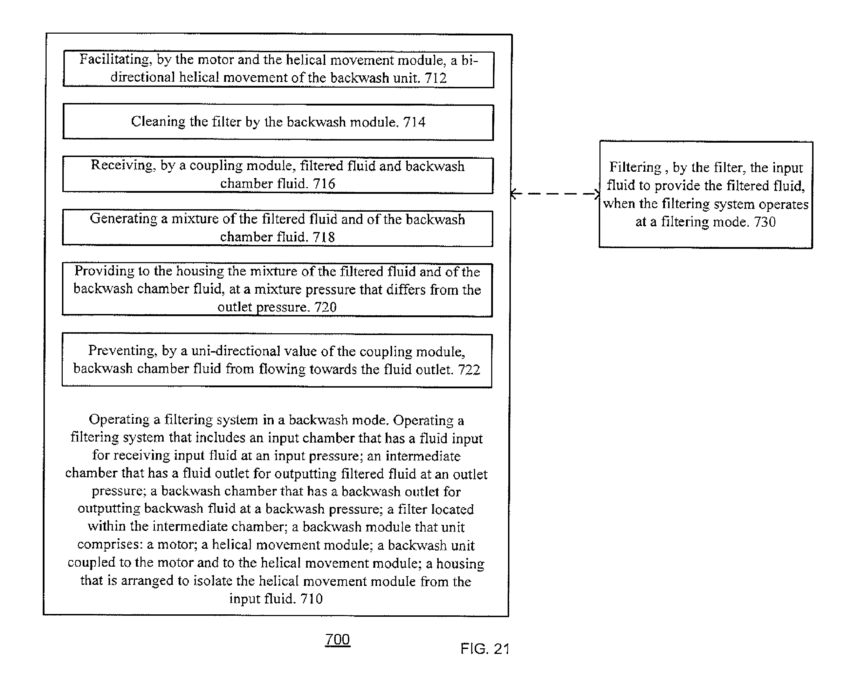

Figure 21 illustrates a method 700 according to an embodiment of the invention.

Method 700 includes stage 710 of operating a filtering system in a backwash mode. Stage 710 includes operating a filtering system that includes an input chamber that has a fluid input for receiving input fluid at an input pressure; an intermediate chamber that has a fluid outlet for outputting filtered fluid at an outlet pressure; a backwash chamber that has a backwash outlet for outputting backwash fluid at a backwash pressure; a filter located within the intermediate chamber; a backwash module that unit comprises: a motor; a helical movement module; a backwash unit coupled to the motor and to the helical movement module; a housing that is arranged to isolate the helical movement module from the input fluid.

Stage 710 may include at least one of stages 712, 714, 716, 718, 720 and 722.

Stage 712 includes facilitating, by the motor and the helical movement module, a bi-directional helical movement of the backwash unit.

Stage 714 includes cleaning the filter by the backwash module.

Stage 716 includes receiving, by a coupling module, filtered fluid and backwash chamber fluid.

Stage 718 includes generating a mixture of the filtered fluid and of the backwash chamber fluid.

Stage 720 includes providing to the housing the mixture of the filtered fluid and of the backwash chamber fluid, at a mixture pressure that differs from the outlet pressure.

Stages 710 can include providing the mixture by a coupling module that is entirely positioned within a space defined by the input chamber, the intermediate chamber and the backwash chamber

Stages 710 can include providing the mixture by a coupling module that has at least a portion that is external to the input chamber, the intermediate chamber and the backwash chamber.

The mixture pressure may substantially equals the backwash pressure. Pressure differences between the mixture pressure and the backwash pressure can be range, for example, between 1 and 40 percents, between 20 and 30 percent, between 5 and 15 percent and the like.

The mixture pressure may be closer to the backwash pressure that to the outlet pressure.

Stage 710 may include reducing a pressure level of the filtered fluid before generating the mixture (stage 718) the filtered fluid and the backwash chamber filter.

The generating the mixture (718) can include mixing a certain amount of the filtered fluid with a larger amount of backwash chamber fluid.

Stage 722 may include preventing, by a uni-directional value of the coupling module, backwash chamber fluid from flowing towards the fluid outlet.

Stage 716 may include receiving the filtered fluid from the filtered fluid outlet by a filtered fluid pipe, and providing by the filtered fluid pipe, the filtered fluid to at least one other element of the coupling module. The at least one other element may be a uni-directional valve, a pipe or a mixing element. The fluid pipe may have has a cross section that is narrower that a cross section of a pipe of the coupling module that is coupled to the input chamber.

Method 700 may also include stage 730 of filtering, by the filter, the input fluid to provide the filtered fluid, when the filtering system operates at a filtering mode.

Stage 730 may be followed by stage 710 and stage 710 may be followed by stage 730. The transition from one stage to the other can be triggered by various prior art methods such as pressure triggered transition (the intermediate pressure may rise with the amount of dirt in the filter).

Any combination of any elements of any of the mentioned above filtering systems can be provided.

Any combination of any stages of any of the mentioned above methods can be provided.

Variations, modifications, and other implementation of what is described herein will occur to those of ordinary skill in the art without departing from the spirit and the scope of the invention as claimed. Accordingly, the invention is to be defined not by the preceding illustrative description but instead by the spirit and scope of the following claims.

## Claims

1. A filtering system, comprising:
an input chamber that has a fluid input and a first auxiliary opening; an intermediate chamber that has a fluid outlet;
a backwash chamber that has a backwash outlet and a second auxiliary opening;
a filter located within the intermediate chamber;
a backwash module that is completely surrounded by at least one space defined by the input chamber, the backwash chamber and the intermediate chamber; wherein the backwash module comprises:
a motor;
a helical movement module;
a backwash unit coupled between the motor and the helical movement module;
a housing that is arranged to isolate the helical movement module from input fluid that is located in the input chamber;
wherein the housing comprises a third auxiliary opening;
wherein the motor and the helical movement module are arranged to facilitate a bi-directional helical movement of the backwash unit, when the filtering system operates in a backwashing mode;
wherein the backwash unit is arranged to clean the filter when the filtering system operates in a backwashing mode;
a coupling module arranged to facilitate a flow of fluid between the first, second and third auxiliary openings; wherein the coupling module comprises an external portion that is external to the input chamber, the intermediate chamber and the backwash chamber;
wherein when the filtering system operates at the backwash mode, the backwash chamber maintains a backwash pressure that is lower than an input chamber pressure that is maintained in the input chamber; and
wherein the filter is arranged to filter input fluid from the fluid input to provide filtered fluid that is arranged to flow from the fluid outlet.

2. The filtering system according to claim 1, wherein the motor is a hydraulic motor.

3. The filtering system according to claim 1, wherein the motor differs from a hydraulic motor.

4. The filtering system according to claim 1, wherein the coupling module comprises a pipe that coupled the first and second auxiliary openings to each other.

5. The filtering system according to claim 1, wherein the coupling module comprises at least two pipes arranged to couple the first and second auxiliary openings to each other and to couple the second and third auxiliary openings to each other.

6. The filtering system according to claim 1 wherein the backwash unit has a first end that is positioned within the input chamber and a second end that is positioned within the backwash chamber; wherein the first and second ends are positioned along a rotational axis over which the backwash unit is arranged to rotate.

7. The filtering system according to claim 6, wherein a distance between the second end of the backwash unit and the intermediate chamber is smaller than a distance between the second end of the backwash unit and an end of the backwash chamber.

8. The filtering system according to claim 6, wherein a distance between the second end of the backwash unit and the intermediate chamber is bigger than a distance between the second end of the backwash unit and an end of the backwash chamber.

9. The filtering system according to claim 6, wherein the second end of the backwash unit is proximate to the intermediate chamber.

10. The filtering system according to claim 6, wherein the second end of the backwash unit is proximate to an end of the backwash chamber.

11. The filtering system according to claim 1, wherein the motor is arranged to introduce a rotational movement about a longitudinal axis of the backwash unit and wherein the helical movement module is arranged to translate the rotational movement to a bi-directionaf helical movement; and wherein the motor is coupled to a piston of the backwash unit; wherein the piston is arranged to perform either one of a linear movement or a helical movement within the cylinder.

12. The filtering system according to claim 1, wherein a majority of the coupling module is positioned outside the input chamber, the intermediate chamber and the backwash chamber.

13. The filtering system according to claim 1, wherein the coupling module comprises an auxiliary filter that is coupled between the first and second auxiliary openings.

14. The filtering system according to claim 1, wherein the coupling module comprises an auxiliary filter that is coupled between the third and second auxiliary openings.

15. The filtering system according to claim 1, comprising: (a) a first auxiliary filter that is coupled between the first and second auxiliary openings and (b) a second auxiliary filter that is coupled between the third and second auxiliary openings.
